# EUROPÄISCHE PATENTSCHRIFT

(11) **EP 1 448 359 B1**
(45) Veröffentlichungstag und Bekanntmachung des Hinweises auf die Patenterteilung: **25.07.2007**
(21) Anmeldenummer: 02782771.6
(22) Anmeldetag: 13.11.2002
(51) Int. Cl.: B29C 67/00, B22F 3/105

(54) **VERFAHREN ZUR HERSTELLUNG VON DREIDIMENSIONALEN WERKSTÜCKEN IN EINER LASER-MATERIALBEARBEITUNGSANLAGE ODER EINER STEREOLITOGRAPHIEANLAGE**
METHOD FOR PRODUCING THREE-DIMENSIONAL WORK PIECES IN A LASER MATERIAL MACHINING UNIT OR A STEREOLITHOGRAPHY UNIT
PROCEDE DE FABRICATION DE PIECES A USINER TRIDIMENSIONNELLES DANS UNE UNITE D'USINAGE DE MATERIAUX AU LASER OU UN SYSTEME DE STEREOLITHOGRAPHIE

(30) Priorität: 26.11.2001 DE 10157647
(43) Veröffentlichungstag der Anmeldung: 25.08.2004
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner, Dieter
(86) Internationale Anmeldenummer: PCT/DE2002/004188
(87) Internationale Veröffentlichungsnummer: WO 2003/045669

(56) Entgegenhaltungen:
- DE-C- 10 007 962

## Beschreibung

Die Erfindung betrifft ein Verfahren zur Herstellung von dreidimensionalen Werkstücken entweder in einer Laser-Materialbearbeitungsanlage oder in einer Stereolitographieanlage.

Es ist bekannt, dreidimensionale Sinterwerkstücke in Laser-Sinter-Automaten herzustellen, wobei lagenweise, insbesondere pulverartiges Sintermaterial aus einer Vorratseinrichtung auf eine Unterlage aufgetragen und durch bereichsweise Bestrahlung mit Laserstrahlung eines Sinterlasers derart erhitzt wird, daß sich die Bestandteile des Sintermaterials bei teilweiser Aufschmelzung des Strahlungsbereichs abhängig zu dem Werkstück lagenweise miteinander verbinden. Dazu wird Laserstrahlung mit einer ersten Energiedichte und/oder einem ersten Fokusdurchmesser eingesetzt. Ebenso sind Stereolitographieverfahren grundsätzlich bekannt.

Sinterverfahren werden insbesondere in Verbindung mit pulverartigen Sintermaterialien eingesetzt, um - je nach Ausgangsmaterial - metallische oder aus Kunststoff bestehende Werkstücke herzustellen. Derartige Werkstücke müssen aufgrund ihrer Oberflächenrauhigkeit und relativen Ungenauigkeit ihrer Kanten regelmäßig nachgearbeitet werden. Dies ist darauf zurückzuführen, daß der Metallsinterprozeß in Bezug auf die minimal zu verarbeitende Partikelgröße des Metallsinterpulvers begrenzt ist. Ab Partikelgrößen von k~ < 20, m ist das Beschichten mit solchen Pulvern problematisch, da sie zu pastösem Verhalten neigen.

Desweiteren ist die Sintertechnologie generell begrenzt durch die minimal herzustellende Sinterspurbreite. Zum einen können nicht beliebig kleine Geometrien gewählt werden, da der Sinterprozeß nur mit bestimmten Fokusdurchmessern funktioniert. Zum anderen haften beim Sinterprozeß die Pulverpartikel an der generierten Sinterspur, was regelmäßig zu gröberen Oberflächenstrukturen und damit zu größeren Spurbreiten als der eingestellte Fokusdurchmesser aufgrund der Wärmeeinflußzone führt. Außerdem hat sich gezeigt, daß alle Oberflächen, die rechtwinklig zur Z-Achse (Senkrechtachse) liegen, eine erhebliche Rauhigkeit aufweisen.

Aus DE 100 07 962 C1 ist ein Metallsinterherstellungsverfahren von Spritzguß- oder DruckgußFormen bekannt, das eine thermische Nachbehandlung zur Verringerung des Oberflächenrauhigkeitsgrades vorsieht, gemäß dem Oberbegriff des Anspruchs 1.

Der Erfindung liegt die Aufgabe zugrunde, ein Verfahren zur Herstellung von dreidimensionalen Werkstücken in einem Laserautomaten derart weiterzubilden, daß die Struktur der Werkstücke sowohl an der Oberfläche als auch im Innenbereich verbessert ist und insbesondere feinste Schlitze und Hinterschnitte insitu erzeugbar sind. Diese Aufgabe wird durch die kennzeichnenden Merkmale des Anspruches 1 gelöst. Vorteilhafte Weiterbildungen ergeben sich aus den Unteransprüchen 2 - 12, denen sich Ansprüche betreffend eine vorteilhafte Vorrichtung zur Durchführung der Verfahren anschließen,

Als Kern der Erfindung wird es angesehen, während dem Werkstückherstellungsprozeß Bereiche des Werkstückes durch den Laser unter Erhöhung seiner Energiedichte aufzuschmelzen oder abzutragen. Dabei kann die Eindringtiefe des Laserstrahls etwa der Dicke einer Materiallage entsprechen, wenn nur einmal über die Materiallage gefahren werden soll und diese gedichtet oder geglättet werden soll. Es ist aber auch möglich, die Eindringtiefe etwas geringer zu wählen und mehrfach über dieselbe Materiallage zu fahren. Dadurch wird das Ergebnis sogar noch verbessert.

Dadurch wird es möglich, daß Werkstücke mit exakten Außenmaßen hergestellt werden können, Werkstücke von Anfang an glatte Oberflächen haben, die nicht besonders nachbearbeitet werden müssen, insgesamt auch dichtere Bauteile hergestellt werden können, feinste Ausnehmungen erzeugt werden, ohne das Werkstück auszubauen und in eine andere Bearbeitungsstation einzusetzen und dort zu justieren. Insgesamt wird durch das Verfahren die Herstellung von Sinterwerkstücken erheblich beschleunigt und verbilligt und die Werkstückgüte deutlich erhöht.

Der Sinterlaser kann zum bereichsweisen Aufschmelzen oder Abtragen der mindestens einen Materiallage gepulst betrieben werden. Es gibt aber auch andere Möglichkeiten, um die Energiedichte zu erhöhen, beispielsweise den Fokusdurchmesser des Laserstrahls zu verkleinern, wobei der Fokusdurchmesser des Laserstrahls zum Aufschmelzen oder Abtragen im Bereich zwischen 10 Mikrometer und 400 Mikrometer liegen kann.

Wird der Sinterlaser über den Oberflächen des Werkstückes verfahrbar angeordnet, ist es auch möglich, mit schräg gestelltem Laserstrahl die Oberfläche des Werkstückes zu beaufschlagen, dadurch sind Hinterschneidungen mit Schrägflächen möglich,

Das Verfahren läßt sich entweder so durchführen, daß jede einzelne aufgebrachte und gesinterte Materiallage nachfolgend abtragend oder überschmelzend bearbeitet wird. Es ist aber auch möglich, beim ersten Überfahren der aufgeschichteten Pulverlage sogleich ein vollständiges Aufschmelzen der Pulverteilchen zu vollziehen, dadurch werden die Lagen extrem dicht, so daß aus dem Sinterprozeß ein Pulver-Umschmelzprozeß wird. Schließlich ist es auch möglich, zunächst mehrere Materiallagen fertigzustellen und diese dann zu bearbeiten, d. h. Ausnehmungen hineinzuschneiden bzw, abzutragen und zu überschmelzen. Aus Zeitgründen kann es sein, das Werkstück aus einer vorbereiteten Metallplatte, insbesondere Stahlplatte bestehen zu lassen, mit dem Abtraglaser in die Stahlplatte Ausnehmungen einzubringen, z. B. Schlitze oder Löcher zu bohren und Erhebungen auf der Oberfläche der Stahlplatte mit Hilfe des Sinterverfahrens aufzubringen. Dadurch entsteht ein kombiniertes Verfahren, das mit herkömmlichen Sinterautomaten und Sinterverfahren nicht möglich ist, weil ein und derselbe Laser zum Materialabtrag, zur Nachbearbeitung von ganz oder teilweise hergestellten, vorgearbeiteten Teilen und als Sinterlaser zum Aufbauen weiterer Erhebungen auf der Stahlplatte eingesetzt wird.

Das bereichsweise Abtragen oder Aufschmelzen kann vorteilhafterweise nach einer Abkühlungsphase der letzen aufgetragenen Materiallage erfolgen. Dadurch wird vermieden, daß sich allzu hohe thermische Spannungen oder überhitzte Bereiche im Werkstück Verwerfungen bilden.

Grundsätzlich ist es möglich, das Bauteil durch Aufschmelzen der Materiallagen insgesamt zu verdichten. Dies setzt voraus, daß zunächst die Materiallagen miteinander verschmolzen werden. Dann wird jede Materiallage nochmals aufgeschmolzen und dadurch eine innigere Verschmelzung der Partikel erzielt. Das Ergebnis ist ein Werkstück mit höherer Dichte.

Die Erfindung ist anhand eines Ausführungsbeispieles in den Zeichnungsfiguren näher erläutert. Diese zeigen:
- Fig. 1: eine schematische Darstellung des Verfahrensschrittes Sintern bzw. Schmelzens einer a) und mehrer Bauteilschichten b);
- Fig. 2 a) -c): schematische Darstellungen des Verfahrensschrittes Abtragen von unterschiedlichen Beträgen einer Schichtdicke;
- Fig. 3 a) -d): schematische Darstellungen von unterschiedlichen Möglichkeiten des Glättens von Oberflächenschichten;
- Fig. 4 a) + b): schematische Darstellung der Verfahrensschritte Abtragen und Aufbauen von Materiallagen;
- Fig. 5: schematische Darstellung eines Verfahrens zur Herstellung von Werkstücken mit exakten Außenmaßen;
- Fig. 6: schematische Darstellung einer Vorrichtung zur Herstellung von dreidimensionalen Werkstücken mit Abstandsmessung und - regelung.

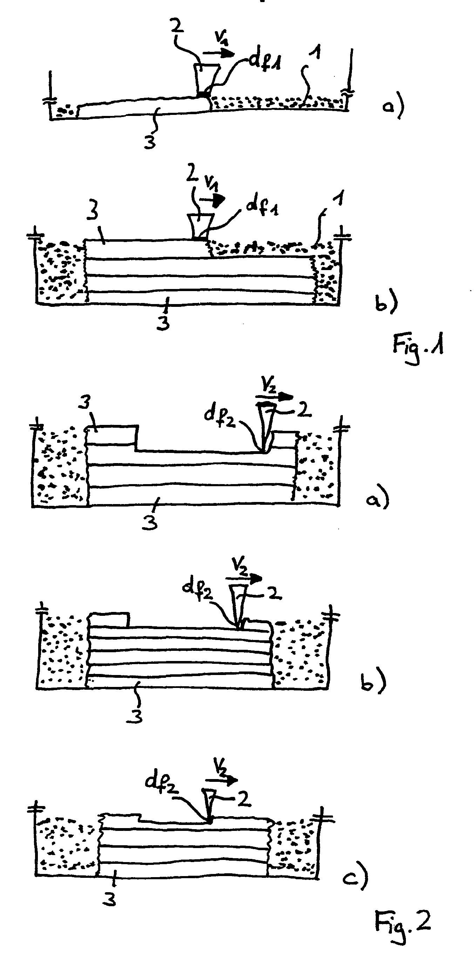

Die Fig. 1 zeigt die prinzipielle Darstellung des Verfahrens zur Herstellung von dreidimensionalen Werkstücken in einer Laser-Materialbearbeitungsanlage oder in einer Stereolitographieanlage, wobei lagenweise pulverartiges Sintermaterial 1 oder ein anderes sinterfähiges pastoses Material aus einer Vorratseinrichtung auf eine Unterlage aufgetragen wird und durch bereichsweise Bestrahlung mit Laserstrahlung eines Lasers derart erhitzt wird, daß sich die Bestandteile des. Sintermaterials 1 oder des pastosen Materials bei zumindest teilweiser Aufschmelzung bestrahlungs-bereichsabhangig lagenweise zu dem Werkstück miteinander verbinden, so daß nach und nach die Materiallagen 3 hergestellt werden. Der Laserstrahl ist mit Bezugsziffer 2 versehen. Dabei wird eine Laserstrahlung mit einer ersten Energiedichte, sowie einem ersten Fokusdurchmesser df₁, einer Leistung P₁ (in der Bearbeitungsebene) bzw. einer Intensität Il (im Arbeitsfokus) und einer Belichtungsgeschwindigkeit v₁ eingesetzt. Daraus resultiert dann eine bestimmte Streckenenergie E1.

Im nächsten Verfahrensschritt gemäß Fig. 2, wobei in den Fig. a) - d) mehrere Alternativen dargestellt sind, werden während dem Werkstückherstellungsprozeß Bereiche des Werkstückes durch den Laser unter Erhöhung seiner Energiedichte abgetragen. Der Laserstrahl 2 hat dabei eine BelichtungsgeschwindigkeitV₂, eine Laserleistung P₂ (in derBearbeitungsebene) bzw. eine Intensität I₂ (im Arbeitsfokus) und damit eine Streckenenergie E₂. Der Fokus in der Bearbeitungsebene wird mit df₂ bezeichnet. Der Fokusdurchmesser df₂ des Laserstrahls 2 zum Abtragen der mindestens einen Materiallage 3 ist in diesem Fall verkleinert.

Der Fokusdurchmesser des Laserstrahls 2 beträgt zum Aufschmelzen und/oder Abtragen zwischen 10 und 400 µm.

Die Parameter mit Index 1 werden also bei der Aufschmelzung des Sintermaterials verwendet, die Parameter mit Index 2 dagegen beim Abtragen bzw. Glätten der Materiallagen.

Der Laser kann zum bereichsweisen Aufschmelzen und/oder Abtragen der mindestens einen Materiallage 3 gepulst betrieben werden.

In den Fig. 2 a) -c) erfolgt das Abtragen nach dem Fertigstellen mehrerer Materiallagen 3, wobei gemäß Fig. 2 a) ein Bereich abgetragen wird, der größer als eine Materiallage 3 ist. In Fig. 2 b) wird dagegen ein Bereich der geschmolzenen Schicht abgetragen, der dem Betrag bzw. der Dicke einer Materiallage 3 entspricht. In Fig. 2 c) wird eine Schicht abgetragen, die geringer ist als die Dicke einer Materiallage 3. Fig. 2 d) zeigt das Abtragen eines Bereiches der geschmolzenen Materiallagen 3 um jeweils einen Bruchteil der Dicke der Materiallage 3 in sich immer wiederholender Reihenfolge, bis eine bestimmte Gesamtschichtdicke entfernt wurde.

Zweckmäßigerweise erfolgt das bereichsweise Abtragen oder Aufschmelzen nach einer Abkühlphase der letzten aufgetragenen Materiallage 3, so daß thermische Spannungen weitgehend vermieden werden.

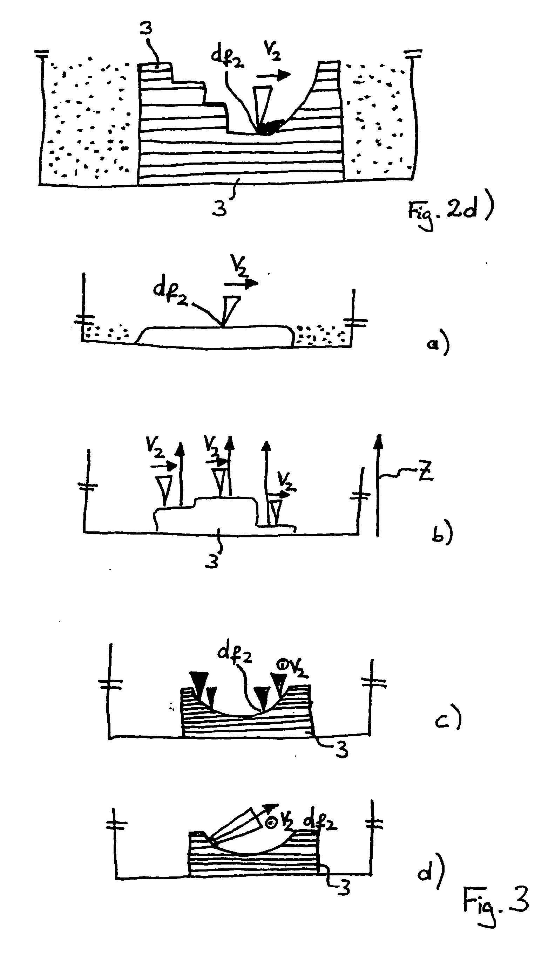

In den Fig. 3 a) - d) sind unterschiedliche Möglichkeiten zum Glätten der Oberflächenschichten, die entsprechend Fig.1 hergestellt wurden, dargestellt. Auch in diesem Fall können die jeweils einzelnen Parameter wie Belichtungsgeschwindigkeit v₂, Laserleistung P₂ in der Bearbeitungsebene sowie Intensität I₂ im Asbeitsfokus als auch der Fokus d_{fz} in der Bearbeitungsebene von den Parametern, die beim Schmelzen der Bauteilschichten eingestellt werden, abweichen. Dabei kann auch jeweils mindestens ein Parameter (z. B. der Fokus in der Bearbeitungsebene) gleich bleiben, wobei sich nur die Leistung, die Intensität und/oder die Belichtungsgeschwindigkeit ändert und umgekehrt. Als weiterer Parameter kann auch der Überlapp Ü der Belichtungsvektoren beim Glätten (ruz) im Vergleich zum Aufschmelzen (Ü₁) variieren.

Das Glätten der Materiallagen 3 erfolgt mit erhöhter Energiedichte des Laserstrahls 2. In Fig. 3a) ist das Glätten einer Materiallage 3 oder von Teilbereichen dieser Materiallage 3 dargestellt. Fig. 3b) zeigt das Glätten von Teilbereichen des Werkstückes, deren Oberflächenvektoren parallel zu der Vertikalachse Z liegen. In Fig. 3b) ist das Glätten von Bauteiloberflächen durch nochmaliges Abfahren aller Bauteilkonturen nach Entfernen von losem Pulver bei ständig senkrecht stehendem Laserstrahl dargestellt. Fig. 3d) zeigt das Glätten von Bauteiloberflächen, mittels eines senkrecht zum Bearbeitungspunkt ausgerichteten Laserstrahls 2.

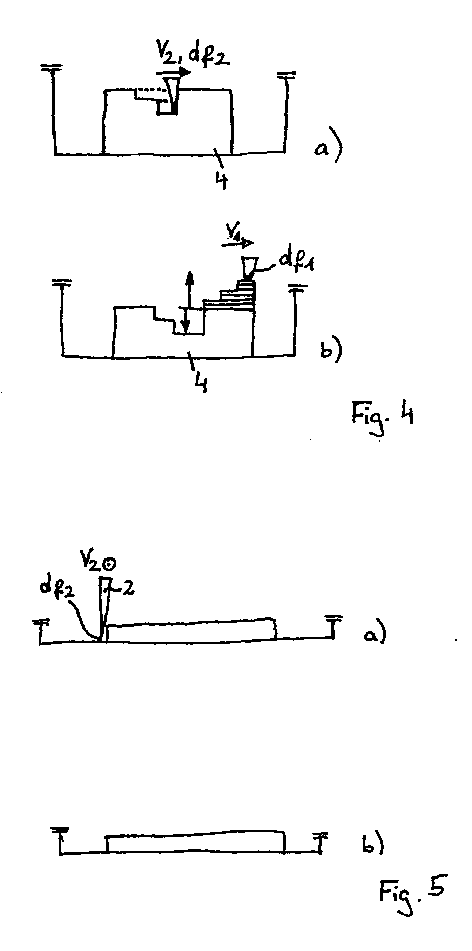

In Fig. 5a) und b) ist das Glätten von Bauteilschichten mittels Abtragen von oberflächlichen Schichten dargestellt. Fig. 5a) zeigt den Laserstrahl 2, der an einer Kante des Bauteils ansetzt.

Fig. 5b) zeigt das Ergebnis nach dem Abtragen der Bauteilkontur mit einer geringeren mittleren Raumtiefe R_{z} als vor dem Glättungsverfahren. Dieses Glätten erfolgt wiederum nach dem Schmelzen mindestens einer oder mehrerer Materiallagen gemäß Fig. 1. Danach wird die Bauteilkontur nach jeder bzw. jeder n-ten Schicht durch Konturfahrt abgetragen, so daß scharfe Übergänge, glatte Außenflächen und maßhaltige Schichten entstehen. Dabei soll eine geschwindigkeitsabhängige Leistungsanpassung für eine konstante Streckenenergie E2 sorgen und eine Gleichmäßigkeit der Konturfahrt garantieren. Wird der Laserausgang an einem Kreuzschlitten angeordnet, so kann durch Verfahren des Kreuzschlittens über dem Werkstück erreicht werden, daß der Laserstrahl rechtwinklig auf die Werkstückoberfläche trifft, wodurch die Abtragegenauigkeit weiter verbessert wird.

Die Materiallagen 3 können im Kantenbereich aller Bauteiloberflächen mit zur Senkrechtachse im wesentlichen rechtwinklig liegenden Oberfläche mit Übermaß hergestellt werden und nachfolgend das Übermaß durch Einsatz von Laserstrahlung erhöhter Energiedichte abgetragen werden, um glatte Oberflächen und Konturen zu erzielen. Ebenso kann es nach der Aufbringung der Materiallagen 3 vorgesehen sein, daß diese durch Aufschmelzen nochmals verdichtet werden.

In Abb. 4a) und b) ist ein Mischverfahren dargestellt, wobei gemäß Fig. 4a) zunächst auf einer vorgefertigten Substratplatte eine Abtragung vorgenommen wird und sodann gemäß Fig. 4b) erhabene Bereiche des Bauteils durch Umschmelzen von Metallpulvern generiert werden. Dabei soll zwischen jeder Abtragschicht bzw. nach einer bestimmten Anzahl von Abtragschichten eine Abstandsmessung stattfinden und in einem software-technischen Regelungsprozeß das Erreichen der gewünschten Abtragtiefe sichergestellt werden.

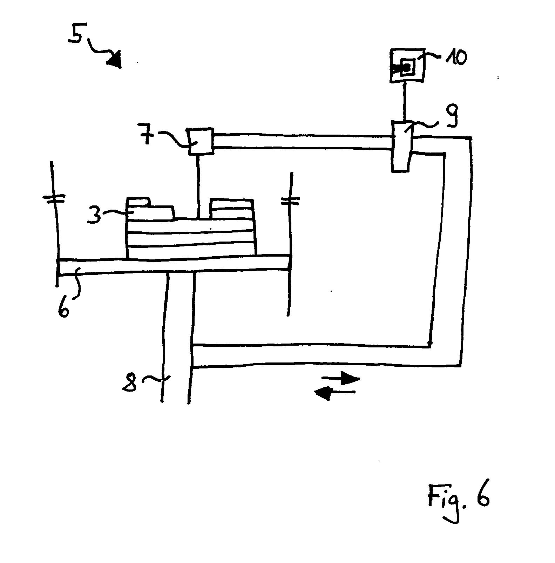

Die Vorrichtung zur Durchführung der oben genannten Verfahren ist mit einem Laser mit Elementen zur Erhöhung der Energiedichte versehen. Diese Vorrichtung ist jedoch in der Zeichnungsfigur 6 nicht näher dargestellt. Die Elemente umfassen eine optische Fokusverstellung und können eine für einen Impulstrieb des Sinterlasers ausgelegte Zündschaltung umfassen. In der in Fig. 6 prinzipiell gezeichneten Vorrichtung ist die Abstandsmessung und -regelung dargestellt, damit eine gewünschte Abtragtiefe bzw. Aufbauhöhe sichergestellt werden kann. Hierzu ist ein Abstandsmesser 7 vorgesehen, der den Abstand z. B. mittels Infrarotlicht oder Lichtquellen in einem anderen Spektralbereich mißt. Die Verstellachse 8 ermöglicht eine Verstellung der Bauplattform 6 in allen Richtungen als auch eine Rotation der Bauplattform 6. In den Rechner 9 können die gewünschten Daten eingegeben werden. Der Rechner 9 vergleicht außerdem die gemessenen Bauteilmaße mit den eingegebenen Daten und regelt bzw. steuert die Verstellachse 8, Über den Monitor 10 können die Daten von der Bedienperson in einfacher Weise kontinuierlich überprüft werden.

Der Laser bzw. die Strahlumlenkung oder -ablenkung selbst ist an einem elektronisch steuerbaren Kreuzschlittenantxieb, der jedoch aus Gründen der Übersichtlichkeit in die Vorrichtung 5 nicht mit eingetragen ist, über der Bauplattform 6 angeordnet. Die Steueranordnung kann außerdem zur automatischen Nachfokussierung des schräg auf eine Werkstückoberfläche fallenden Laserstrahls 2 dienen.

## Patentansprüche

1. Verfahren zur Herstellung von dreidimensionalen Werkstücken in einer Laser-Materialbearbeitunganslage oder einer Stereolitographieanlage, wobei entweder lagenweise Sintermaterial oder pastoses Material aus einer Vorratseinrichtung auf eine Unterlage aufgetragen und durch bereichsweise Bestrahlung mit Laserstrahlung eines Lasers derart erhitzt wird, daß sich die Bestandteile des Sintermaterials oder pastosen Materials bei zumindest teilweiser Aufschmelzung bestrahlungs-bereichsabhängig lagenweise zu dem Werkstück miteinander verbinden, wozu Laserstrahlung mit einer ersten Energiedichte und/oder einem ersten Fokusdurchmesser eingesetzt wird,
**dadurch gekennzeichnet, daß**
während des Werkstückherstellungsprozesses auf Bereiche des Werkstückes eine oder mehrere Materiallagen aufgebracht und verfestigt werden und vor dem Aufbau weiterer Materiallagen die vorherigen durch den Laser unter Erhöhung seiner Energiedichte abtragend oder überschmelzend bearbeitet werden.

2. Verfahren nach Anspruch 1,
**dadurch gekennzeichnet, daß**
das Werkstück teilweise aus einer vorgefertigten Metallplatte besteht und mittels des Sinterlasers Erhebungen auf die vorgefertigte Metallplatte aufgebaut und/oder Ausnehmungen in die vorgefertigte Metallplatte abgetragen werden.

3. Verfahren nach Anspruch 1 oder 2,
**dadurch gekennzeichnet, daß**
der Laser zum bereichsweisen Aufschmelzen und/oder Abtragen der mindestens einen Materiallage gepulst betrieben wird.

4. Verfahren nach einem der vorhergehenden Ansprüche,
**dadurch gekennzeichnet, daß**
der Fokusdurchmesser des Strahls zum Aufschmelzen und/oder Abtragen der mindestens einen Materiallage verkleinert ist.

5. Verfahren nach einem der Ansprüche 1-3,
**dadurch gekennzeichnet, daß**
beim Aufschmelzen der Fokusdurchmesser bei gleichzeitiger Erhöhung der Energiedichte vergrößert ist.

6. Verfahren nach Anspruch 4,
**dadurch gekennzeichnet, daß**
der Fokusdurchmesser des Strahls zum Aufschmelzen und/oder Abtragen im Bereich zwischen 10 Mikrometer und 400 Mikrometer beträgt.

7. Verfahren nach einem der vorhergehenden Ansprüche,
**dadurch gekennzeichnet, daß**
der Laser oder eine zugehörige Strahlablenkeinheit über den Oberflächen des Werkstückes verfahrbar ist.

8. Verfahren nach einem der vorhergehenden Ansprüche,
**dadurch gekennzeichnet, daß**
das Verfahren an metallgesinterten bzw. metallgeschmolzenen Werkstücken eingesetzt wird.

9. Verfahren nach einem der vorhergehenden Ansprüche,
**dadurch gekennzeichnet, daß**
das bereichsweise Abtragen nach dem Fertigstellen mehrerer Materiallagen erfolgt und mehrere Materiallagen durchdringt.

10. Verfahren nach einem der vorhergehenden Ansprüche,
**dadurch gekennzeichnet, daß**
das bereichsweise Abtragen oder Aufschmelzen nach einer Abkühlphase der letzen aufgetragenen Materiallage erfolgt.

11. Verfahren nach einem der vorhergehenden Ansprüche,
**dadurch gekennzeichnet, daß**
nach dem Herstellen von einer oder mehreren Materiallagen die Bauteilkontur mit erhöhter Energiedichte des Laserstrahls abgefahren und **dadurch** der Werkstückrand abgetragen und/oder geglättet wird.

12. Verfahren nach einem der vorhergehenden Ansprüche,
**gekennzeichnet durch**
Verdichtung des Bauteils **durch** Aufschmelzen der Materiallagen nach deren Aufbringen.

13. Verfahren nach einem der vorhergehenden Ansprüche,
**dadurch gekennzeichet, daß**
die Materiallagen im Kantenbereich aller Bauteiloberflächen mit zur Z-Achse (Senkrechtachse) im wesentlichen rechtwinklig liegenden Oberflächen mit Übermaß hergestellt werden und nachfolgend das Übermaß durch Einsatz von Laserstrahlung erhöhter Energiedichte abgetragen wird, um glatte Oberflächen und Konturen sowie hochpräzise Bauteile zu erzielen.

## Claims

1. Method of producing three-dimensional workpieces in a laser material machining system or a stereo-lithography system, either sintered material or paste-like material being applied from a storage means in layers to a base and being heated by irradiation with laser radiation from a laser in various regions, in such a manner that the constituent ingredients of the sintered material or paste-like material combine together during an at least partial fusion, depending on the irradiation and region, in layers to form the workpiece, for which purpose laser radiation having a first density of energy and a first focal diameter is used, **characterised in that**, during the workpiece production process, one or more material layers are applied to regions of the workpiece and are consolidated, and the previous material layers are machined by the laser with an increase in its density of energy in an abrading or surfusing manner prior to the incorporation of additional material layers.

2. Method according to claim 1, **characterised in that** the workpiece partially comprises a prefabricated metal plate and, by means of the sintering laser, raised portions are built up onto the prefabricated metal plate and or recessed portions are abraded from the prefabricated metal plate.

3. Method according to claim 1 or 2, **characterised in that** the laser is operated for the partial fusing and/or abrading of the at least one material layer in a pulsated manner.

4. Method according to one of the preceding claims, **characterised in that** the focal diameter of the beam is reduced for fusing and/or abrading the at least one material layer.

5. Method according to he of claims 1-3, **characterised in that**, during the fusion, the focal diameter is enlarged with a simultaneous increase in the density of energy.

6. Method according to claim 4, **characterised in that** the focal diameter of the beam for melting and/or abrading is in the range between 10 micrometers and 400 micrometers.

7. Method according to one of the preceding claims, **characterised in that** the laser or an associated beam-deflecting unit is displaceable over the surfaces of the workpiece.

8. Method according to one of the preceding claims, **characterised in that** the method is used for metal-sintered or respectively metal-fused workpieces.

9. Method according to one of the preceding claims, **characterised in that** the abrading in regions is effected after the completion of a plurality of material layers and penetrates a plurality of material layers.

10. Method according to one of the preceding claims, **characterised in that** the abrading or fusing in regions is effected after a cooling-down phase of the last applied material layer.

11. Method according to one of the preceding claims, **characterised in that**, after the production of one or more material layers, the structural part configuration is started with an increased density of energy of the laser beam, and the workpiece edge is abraded and/or smoothened thereby.

12. Method according to one of the preceding claims, **characterised by** compacting the structural parts during fusing of the material layers after they have been applied.

13. Method according to one of the preceding claims, **characterised in that** the material layers, in the edge region of all of the structural part surfaces, are produced with an excess, with surfaces situated substantially at right angles to the Z axis (vertical axis), and thereafter the excess is abraded by the use of laser radiation with increased density of energy, in order to achieve smooth surfaces and configurations as well as very precise structural parts.

## Revendications

1. Procédé de fabrication de pièces tridimensionnelles dans une unité d'usinage de matériaux au laser ou un système de stéréolithographie, dans lequel du matériau fritté par couches ou du matériau pâteux provenant d'un équipement de stockage est appliqué sur un support et chauffé par exposition sectorielle au rayonnement laser d'un laser de manière que, lors d'une fusion au moins partielle, les composants du matériau fritté ou du matériau pâteux se combinent entre eux par couches en fonction des zones d'exposition pour former la pièce, un rayonnement laser avec une première densité d'énergie et/ou un premier diamètre de foyer étant utilisé pour cela,
**caractérisé en ce que**
une ou plusieurs couches de matériau sont appliquées et consolidées sur des secteurs de la pièce pendant le processus de fabrication de la pièce et, avant la formation d'autres couches de matériau, les précédentes sont usinées par enlèvement ou fusion par le laser en élevant sa densité d'énergie.

2. Procédé selon la revendication 1,
**caractérisé en ce que**
la pièce est partiellement constituée d'une plaque métallique préfabriquée et, au moyen du laser de frittage, des élévations sont formées sur la plaque métallique préfabriquée et/ou des creux enlevés dans la plaque métallique préfabriquée.

3. Procédé selon la revendication 1 ou 2,
**caractérisé en ce que**
le laser pour la fusion et/ou l'enlèvement par secteurs de ladite au moins une couche de matériau est exploité en régime pulsé.

4. Procédé selon l'une des revendications précédentes,
**caractérisé en ce que**
le diamètre de foyer du faisceau pour la fusion et/ou l'enlèvement de ladite au moins une couche de matériau est diminué.

5. Procédé selon l'une des revendications 1 à 3,
**caractérisé en ce que**
lors de la fusion, le diamètre de foyer est augmenté avec élévation simultanée de la densité d'énergie.

6. Procédé selon la revendication 4,
**caractérisé en ce que**
le diamètre de foyer du faisceau pour la fusion et/ou l'enlèvement se situe dans la plage comprise entre 10 micromètres et 400 micromètres.

7. Procédé selon l'une des revendications précédentes,
**caractérisé en ce que**
le laser ou une unité de déviation de faisceau associée peut être déplacé(e) au-dessus des surfaces de la pièce.

8. Procédé selon l'une des revendications précédentes,
**caractérisé en ce que**
le procédé est utilisé sur des pièces réalisées par frittage de métal ou fusion de métal.

9. Procédé selon l'une des revendications précédentes,
**caractérisé en ce que**
l'enlèvement par secteurs est effectué après la réalisation de plusieurs couches de matériau et traverse plusieurs couches de matériau.

10. Procédé selon l'une des revendications précédentes,
**caractérisé en ce que**
l'enlèvement ou la fusion par secteurs est effectué(e) après une phase de refroidissement de la dernière couche de matériau appliquée.

11. Procédé selon l'une des revendications précédentes,
**caractérisé en ce que**
après la réalisation d'une ou plusieurs couches de matériau, le contour de la pièce est parcouru avec une densité d'énergie plus élevée du faisceau laser, moyennant quoi le bord de la pièce est enlevé et/ou lissé.

12. Procédé selon l'une des revendications précédentes,
**caractérisé par**
un compactage de la pièce par fusion des couches de matériau après leur application.

13. Procédé selon l'une des revendications précédentes,
**caractérisé en ce que**
les couches de matériau au bord de toutes les surfaces de pièce ayant des surfaces essentiellement orthogonales à l'axe Z (axe vertical) sont réalisées avec une cote majorée et la cote majorée est ensuite enlevée par utilisation d'un rayonnement laser de densité d'énergie plus élevée afin d'obtenir des surfaces et des contours lisses ainsi que des pièces de haute précision.
